Europäisches Patentamt

(19) European Patent Office

Office européen des brevets

(11) Numéro de publication: **0 292 415**

**A1**

(12) **DEMANDE DE BREVET EUROPEEN**

(21) Numéro de dépôt: **88430012.0**

(22) Date de dépôt: **18.05.88**

(51) Int. Cl.⁴: **F 16 B 7/04**

(30) Priorité: **18.05.87 FR 8706955**

(43) Date de publication de la demande:
**23.11.88 Bulletin 88/47**

(84) Etats contractants désignés:
**AT BE CH DE ES FR GB GR IT LI LU NL SE**

(71) Demandeur: **David, Jean René**
**48 bis Boulevard du Righi**
**F-06100 Nice (FR)**

(72) Inventeur: **David, Jean René**
**48 bis Boulevard du Righi**
**F-06100 Nice (FR)**

(74) Mandataire: **Hautier, Jean-Louis**
**Cabinet Hautier Office Méditerranéen de Brevets**
**d'Invention et de Marques 24 rue Masséna**
**F-06000 Nice (FR)**

(54) **Dispositif faisant office de raccord pour l'assemblage de tubes formant une armature pour des panneaux.**

(57) L'invention a pour objet un dispositif faisant office de raccord pour l'assemblage de tubes formant une armature pour des panneaux.

Le profil intérieur dudit raccord forme, au niveau de chaque voie, une bordure (3) dans laquelle peuvent venir prendre appui les dents (4) issues d'un dispositif à mâchoires (5) dont le serrage s'effectue à partir du tube profilé dans laquel il est emmanché au moyen d'un manchon (9) et qui permet l'assemblage au niveau de chaque voie du raccord. Ledit manchon (9) est emmanché à l'extrémité du tube ou profilé à assembler au raccord. A l'intérieur dudit manchon (9) est disposé un dispositif à mâchoires (5) dont le serrage s'effectue à partir du tube ou profilé. Les deux mâchoires sont maintenues entre-elles contre le manchon (9) au niveau d'un axe de pivotement et par un ressort d'écartement disposé entre les deux éléments.

L'invention s'applique notamment au montage des stands d'exposition, à l'aménagement et la décoration de boutiques.

FIG.1

EP 0 292 415 A1

Bundesdruckerei Berlin

## Description

**"Dispositif faisant office de raccord pour l'assemblage de tubes formant une armature pour des panneaux"**

L'invention a pour objet un dispositif faisant office de raccord pour l'assemblage de tubes formant une armature pour des panneaux.

L'invention est un perfectionnement à la demande de brevet d'invention déposée le 22 octobre 1986 sous le n° 86.14768.

Comme dans la demande de brevet principale, on retrouve les moyens techniques suivants :

Un dispositif à mâchoires destiné à être logé dans un profilé creux au niveau d'une extrémité de celui-ci, du type comprenant deux éléments associés définissant chacun, à l'une de leurs extrémités, une partie de mâchoire destinée à faire saillie hors de l'extrémité du profilé creux, un moyen d'écartement actionnable de l'extérieur du profilé, permettant d'écarter sélectivement les parties de mâchoires en réalisant un pivotement relatif des éléments l'un par rapport à l'autre autour de formations d'articulation coopérantes formées sur les éléments et empêchant un déplacement relatif de ceux-ci dans une direction perpendiculaire à l'axe du pivotement, un premier élément comprend, à l'opposé de sa partie de mâchoire, une partie d'extrémité, définissant une zone intérieure de portée à configuration cylindrique dans laquelle est reçue la partie d'extrémité opposé à la partie de mâchoire du second élément.

Le dispositif est composé
- d'un raccord, proprement dit, à une ou plusieurs voies, dont les angles d'orientation peuvent être variés,
- d'un dispositif à mâchoires, dont le serrrage s'effectue à partir du tube profilé dans lequel il est emmanché, au moyen d'un manchon qui permet l'assemblage au niveau d'une des voies du raccord correspondant,
- d'une pièce support panneaux assurant le maintien entre les profilés ou tubes d'éléments tels que des panneaux de séparation, d'affichage, de décoration.

Le raccord à une ou plusieurs voies a ses facettes qui sont tronquées. Le profil intérieur dudit raccord forme, au niveau de chaque voie, une bordure dans lequel peuvent venir prendre appui les dents issues d'un dispositif à mâchoires dont le serrage s'effectue à partir du tube profilé dans lequel il est emmanché au moyen d'un manchon et qui permet l'assemblage au niveau de chaque voie du raccord.

Ledit manchon est emmanché à l'extrémité du tube ou profilé à assembler au raccord.

A l'intérieur dudit manchon est disposé un dispositif à mâchoires dont le serrage s'effectue à partir du tube ou profilé. Les deux mâchoires sont maintenues entre-elles contre le manchon au niveau d'un axe de pivotement et par un ressort d'écartement disposé entre les deux éléments.

L'axe de pivotement est disposé sur la face externe des deux éléments du dispositif de serrage vers l'intérieur du tube ou profilé tandis que les extrémités, côté extérieur des deux éléments composant les mâchoires, comportent des dents d'accrochage qui viennent s'accrocher sur les bordures formées au niveau de chaque voie du raccord.

Les dessins ci-joints sont donnés à titre d'exemples indicatifs et non limitatifs. Ils représentent un mode de réalisation préféré selon l'invention. Ils permettront de comprendre aisément l'invention.

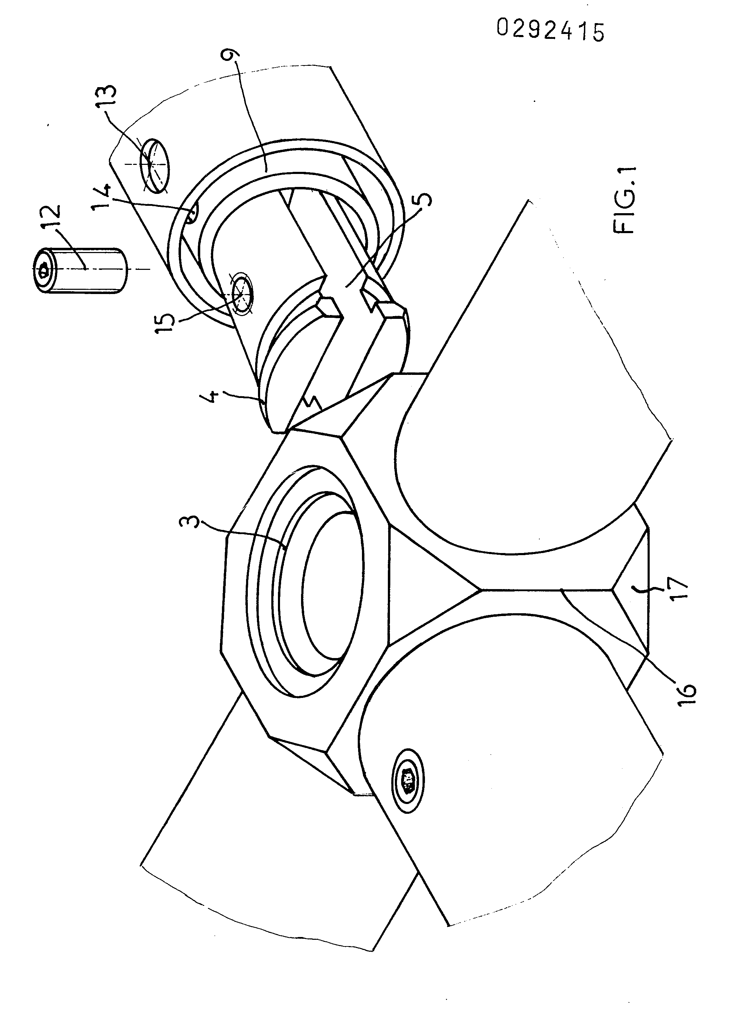

La figure 1 est une vue en perspective d'un raccord selon l'invention mettant en évidence le raccord, le dispositif à mâchoires, le manchon et le tube ou profilé.

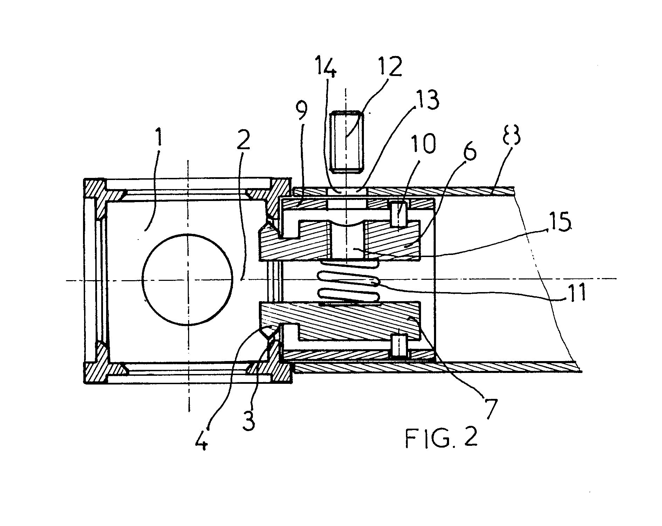

La figure 2 est une vue en coupe du raccord, du dispositif de serrage à mâchoires, du manchon, du tube ou profilé.

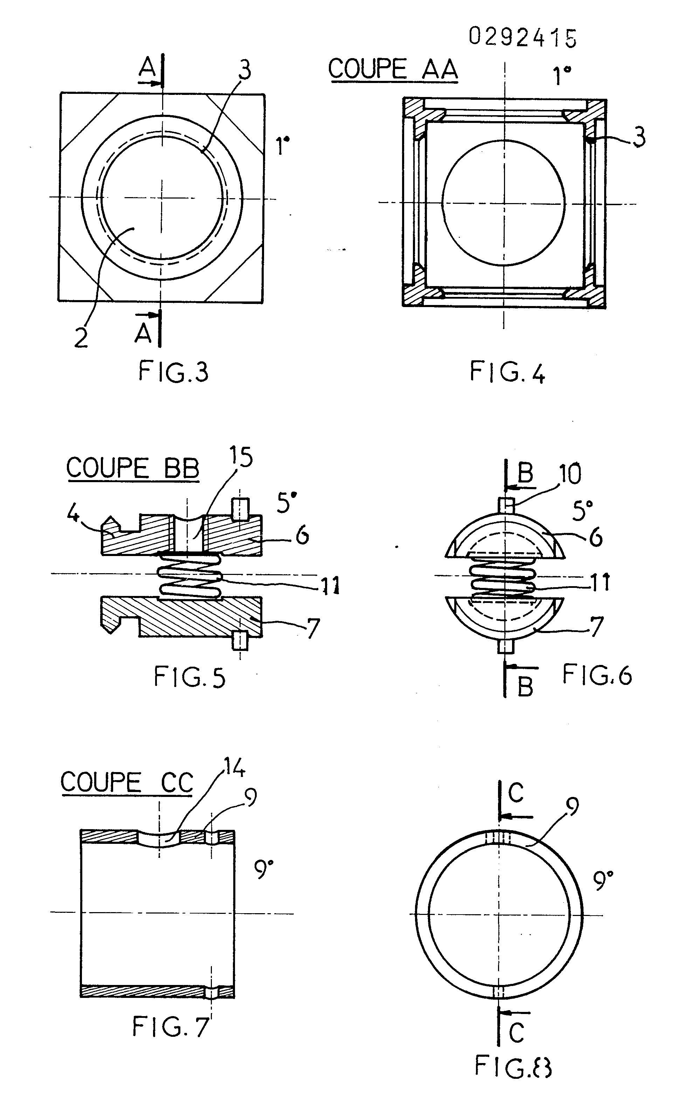

La figure 3 est une vue de face.

La figure 4 est une vue en coupe selon l'axe de coupe A-A représenté à la figure 3.

La figure 5 est une vue en coupe selon l'axe de coupe B-B représenté à la figure 6 du dispositif de serrage à mâchoires.

La figure 6 est une vue de côté, vu en bout dudit dispositif représenté à la figure 5.

La figure 7 est une vue en coupe selon l'axe de coupe C-C représenté à la figure 8 du manchon.

La figure 8 est une vue de face du manchon représenté à la figure 7.

Le raccord 1 peut être à une ou plusieurs voies. Dans l'exemple représenté, le raccord est à six voies.

Chaque voie 2 comporte une bordure 3 dans laquelle peuvent venir s'accrocher les dents 4 du dispositif de serrage à mâchoires 5.

Le dispositif de serrage 5 est composé de deux éléments 6 et 7 formant chacun une partie semi-circulaire vers la périphérie du tube ou profilé 8 à assembler avec ledit raccord.

Ces deux éléments 6 et 7 sont introduits partiellement dans un manchon 9. A une extrémité, les deux éléments 6,7 ont un axe de pivotement 10 disposé entre les deux éléments 6,7 et le manchon 9. Un ressort 11 est disposé entre les deux éléments 6,7 de manière à les maintenir écartés.

A l'autre extrémité, les deux éléments 6,7 sortent du tube ou profilé 8 et se terminent par des dents 4 qui viennent se positionner dans la bordure 3 de la voie 2 du raccord 1.

Le dispositif de serrage est actionné, à partir du tube 8, par un moyen d'écartement 12 tel qu'un boulon dont la tête forme un évidement à six pans. Ce boulon 12 passe à travers un trou fileté 13 prévu dans le tube 8, puis dans un autre trou 14 du manchon 9 et enfin dans un trou 15 d'un des deux éléments 6, pour venir par l'extrémité dudit boulon 12 ou butée contre l'autre élément 7.

Au niveau des coins des arêtes 16 du raccord 1, des troncatures 17 peuvent être mises en place pour donner un aspect esthétique plus doux et par sécurité en cas de choc au niveau des raccords.

## Revendications

1. Dispositif faisant office de raccord pour l'assemblage de tubes formant une armature pour notamment des panneaux composés d'un raccord proprement dit, à une ou plusieurs voies, dont les angles d'orientation peuvent varier, d'une pièce support panneaux assurant le maintien entre lesdits panneaux selon la revendication 1 de la demande de brevet principale déposé le 22.10.86 sous le n° 86.14768 caractérisé par le fait qu'il comporte un dispositif à mâchoires (5) dont le serrage s'effectue à partir de tube ou profilé (8) dans lequel il est emmanché au moyen d'un manchon (9) et qui permet l'assemblage au niveau d'une des voies (2) du raccord (1) correspondant.

2. Dispositif selon la revendication 1 caractérisé par le fait que le profil intérieur dudit raccord (1) forme, au niveau de chaque voie (2), une bordure (3) dans laquelle peuvent venir prendre appui les dents (4) issues d'un dispositif à mâchoires (5) dont le serrage s'effectue à partir du tube profilé (8) dans lequel il est emmanché au moyen d'un manchon (9) et qui permet l'assemblage au niveau de chaque voie du raccord.

3. Dispositif selon l'une quelconque des revendications 1 ou 2 caractérisé par le fait que ledit manchon (9) est emmanché à l'extrémité du tube ou profilé (8) à assembler au raccord.

4. Dispositif selon l'une quelconque des revendications 1, 2 ou 3 caractérisé par le fait qu' à l'intérieur dudit manchon (9) est disposé un dispositif à mâchoires (5) dont le serrage s'effectue à partir du tube ou profilé (8) ; les deux mâchoires sont maintenues entre-elles contre le manchon (9) au niveau d'un axe (10) de pivotement et par un ressort d'écartement (11) disposé entre les deux éléments (6,7).

5. Dispositif selon l'une quelconque des revendications 1, 2, 3 ou 4 caractérisé par le fait que l'axe de pivotement (10) est disposé sur la face externe des deux éléments (6,7) du dispositif de serrage vers l'intérieur du tube ou profilé (8) tandis que les extrémités, côté extérieur des deux éléments (6,7) composant les mâchoires, comportent des dents d'accrochage (4) qui viennent s'accrocher sur les bordures (3) formées au niveau de chaque voie (2) du raccord (1).

6. Dispositif selon l'une quelconque des revendications 1, 2, 3, 4 ou 5 caractérisé par le fait que les deux éléments (6,7) sortent du tube ou profilé (8) et se terminent par des dents (4) qui viennent se positonner dans la bordure (3) de la voie (2) du raccord (1).

7. Dispositif selon l'une quelconque des revendications 1, 2 3, 4, 5 ou 6 caractérisé par le fait que le dispositif de serrage est actionné, à partir du tube (8), par un moyen d'écartement (12) tel qu'un boulon dont la tête forme un évidement à six pans ; ce boulon (12) passe à travers un trou fileté (13) prévu dans le tube (8), puis dans un autre trou (14) du manchon (9) et enfin dans un trou (15) d'un des deux éléments (6), pour venir par l'extrémité dudit boulon (12) ou butée contre l'autre élément (7).

8. Dispositif selon la revendication 1 caractérisé par le fait qu' au niveau des coins des arêtes (16) du raccord (1), des troncatures (17) peuvent être mises en place pour donner un aspect esthétique plus doux et par sécurité en cas de choc au niveau des raccords.

FIG.1

0292415

FIG. 2

0292415

COUPE AA

FIG.3

FIG.4

COUPE BB

FIG.5

FIG.6

COUPE CC

FIG.7

FIG.8

Office européen
des brevets

**RAPPORT DE RECHERCHE EUROPEENNE**

Numero de la demande

EP  88 43 0012

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 361 819  (F. FREIXA JOVE)<br>* figures 1,2 *<br>--- | 1,4,7 | F 16 B    7/04 |
| A | LU-A-   55 286  (E. GEISLER-LIGNIAN S.A.)<br>* figure 3 *<br>--- | 1,5 | |
| A | EP-A-0 080 556  (HESTEX SYSTEMS B.V.)<br>* figure 2; abrégé *<br>----- | 1 | |

**DOMAINES TECHNIQUES RECHERCHES (Int. Cl.4)**

F 16 B    7/00

**Le présent rapport a été établi pour toutes les revendications**

| Lieu de la recherche | Date d'achèvement de la recherche | Examinateur |
|---|---|---|
| BERLIN | 22-07-1988 | SCHAEFFLER C.A.A. |